# EUROPEAN PATENT APPLICATION

(11) **EP 1 288 072 A2**
(43) Date of publication of application: **05.03.2003**
(21) Application number: 02019228.2
(22) Date of filing: 27.08.2002
(51) Int. Cl.: B60Q 1/48

(54) **Driver assistance device taking into account the overhang of other vehicles**

(30) Priority: 28.08.2001 JP 2001257104
(71) Applicant: Aisin Seiki Kabushiki Kaisha, Kariya-shi, Aichi-ken (JP)
(72) Inventor: Kakinami, Toshiaki, Nagoya-shi, Aichi-ken (JP)
(74) Representative: Leson, Thomas Johannes Alois, Dipl.-Ing.

(57) **Abstract**

A drive assist device which enables to judge whether an operator's own vehicle contacts an object with an overhang even when an estimated driving locus is displayed crawling under the object with the overhang. With the drive assist device, matching of nodes between plural images is performed based on a moving amount of the operator's own vehicle calculated based on the plural images obtained with a CCD camera during vehicle driving and a vehicle signal calculated based on a vehicle speed signal detected with a combination meter and a steering angle signal detected with a steering angle sensor. A three-dimensional positional data of the matched modes is calculated to be projected on and memorized in a three-dimensional map. The existence of the object inside of the estimated driving locus of the operator's own vehicle using the three-dimensional map.

## Description

### FILED OF THE INVENTION

The present invention relates to a drive assist device. More particularly, the present invention pertains to a drive assist device for assisting a driving operation using images displayed on a screen.

### BACKGROUND OF THE INVENTION

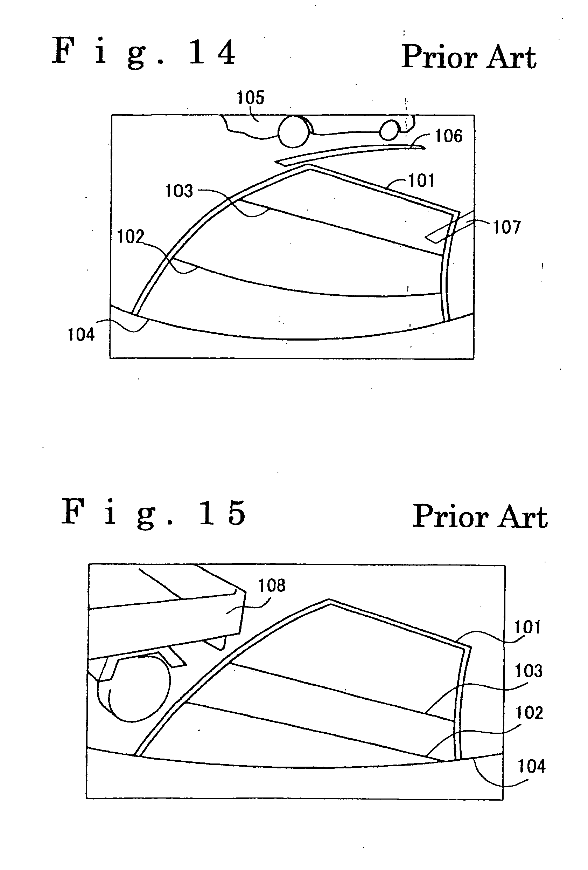

A known drive assist device for assisting the driving operation using images displayed on a screen is disclosed as shown in Fig. 14, in which guide lines are applied on a rearview image of an operator's own vehicle displayed on the screen. 'As shown in Fig. 14, the screen displays a bumper rear end 104 of the operator's own ' vehicle, an objective vehicle 105, two white lines 106, 107 as an image reward of the operator's own vehicle as well as an estimated driving locus 101, and two distance indicator lines 102, 103 as guiding lines.

The estimated driving locus 101 is shown by projecting a moving locus of a most protruding portion of the operator's own vehicle on a road surface and is calculated from a steering angle. Two distance indicator lines 102, 103 are also projected on the road surface in a display cooperating with the steering operation. Thus, by locating the estimated driving locus 101 between two white lines 106, 107 while confirming that there is no obstacle such as the objective vehicle 105 inside the estimated driving locus 101 when operating the steering, the operator's own vehicle can be easily parked between the two white lines 106, 107.

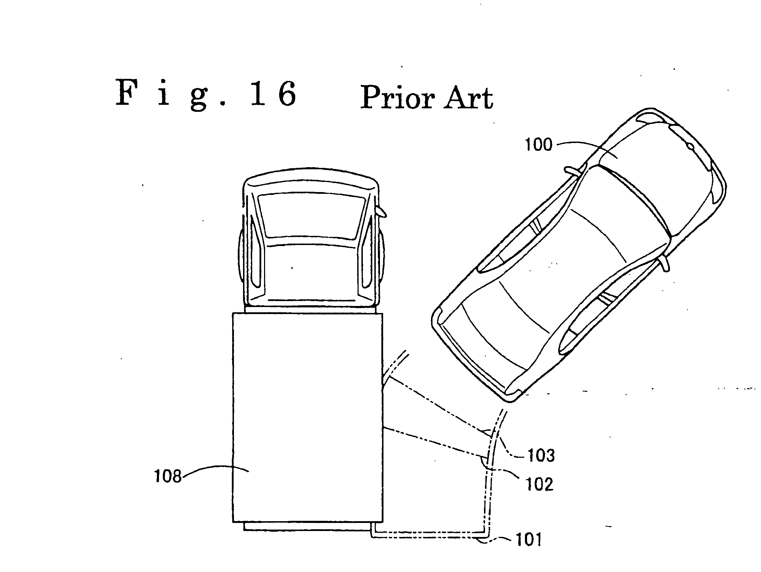

Notwithstanding, because the guide lines such as the estimated driving locus 101, and distance indicator lines 102, 103 are determined referring to the road surface, the contact of the object with an overhang of the operator's own vehicle could not be estimated in case the estimated driving locus 101 crawls under the object with the overhang. For example, when an operator's own vehicle 100 and an objective vehicle 108 are positioned as shown in Fig. 16, the estimated driving locus 101 crawls under the objective vehicle 108 as viewed in the screen of the display as shown in Fig. 15. Although, in this case, it may look that the operator's own vehicle 100 does not contact the objective vehicle 108 even if moving backward from the condition shown in Fig. 15, in reality, the operator's own vehicle 100 contacts the objective vehicle 108.

A need thus exists for a drive assist device which enables to judge whether an operator's own vehicle contacts an object with an overhang even when an estimated driving locus crawls under the object with the overhang.

### SUMMARY OF THE INVENTION

In light of the forgoing, according to one aspect of the present invention, a drive assist device includes a shooting means for obtaining an image showing a surrounding environment of an operator's own vehicle, an estimated driving locus presuming means for calculating an estimated driving locus of the operator's own vehicle from a steering angle of the operator's own vehicle, a display means for displaying the estimated driving locus overlapping the image, a judging means for judging an existence of an object contacting the operator's own vehicle whose is estimated to move along the estimated driving locus, a moving amount detection means for detecting a moving amount of the operator's own vehicle, and a three-dimensional environment presuming means for recognizing the surrounding environment of the operator's own vehicle from the plural images obtained during operating the operator's own vehicle and from the moving amount of the operator's own vehicle. The judging means judges the existence of the object contacting the operator's own vehicle based on the surrounding environment of the operator's own vehicle which is three-dimensionally recognized with the three-dimensional environment presuming means.

According to another aspect of the present invention, a drive assist device is programmed to shoot an image of a surrounding environment of an operator's own vehicle, to calculate an estimated driving locus of the operator's own vehicle from a steering angle of the operator's own vehicle, to display an estimated driving locus overlapping the image, to judge an existence of an object contacting the operator's own vehicle within the estimated driving locus, to detect a moving amount of the operator's own vehicle, to recognize the surrounding environment of the operator's own vehicle based on the plural images obtained during operation of the operator's own vehicle and from the moving amount of the operator's own vehicle, and to judge the existence of the existence of the object contacting the operator's own vehicle based on the surrounding environment of the operator's own vehicle which is three-dimensionally recognized.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.
Fig. 1 is a flowchart of a drive assist device according to an embodiment of the present invention.
Fig. 2 is a flowchart of the drive assist device according to the embodiment of the present invention.
Fig. 3 is a flowchart of the drive assist device according to the embodiment of the present invention.
Fig. 4 is a perspective view of a vehicle equipped with the drive assist device according to the embodiment of the present invention.
Fig. 5 is a block view of the drive assist device according to the embodiment of the present invention.
Fig. 6 is a view showing an example of each image and environment of an operator's own vehicle when the drive assist device is used for back up parking of the vehicle according to the embodiment of the present invention.
Fig. 7 is a view showing an example of a reference coordinate of a three-dimensional map when the drive assist device is used for back up parking of the vehicle according to the embodiment of the present invention.
Fig. 8 is a view showing an example when it is judged that an object exists inside of an estimated driving locus of the operator's own vehicle according to the drive assist device of the present invention.
Fig. 9 is a view showing an example when it is judged that an object exists inside of the estimated driving locus of the operator's own vehicle according to the drive assist device of the present invention.
Fig. 10 is a view showing an example of an image displayed on a display of the drive assist device according to the embodiment of the present invention.
Fig. 11 is a view showing an example of an image displayed on the display of the drive assist device according to the embodiment of the present invention.
Fig. 12 is a view showing an example of a view of each image and environment of the operator's own vehicle when applying the drive assist device to parallel parking by the backward operation of the vehicle.
Fig. 13 is a view showing an example of the reference coordinate of the three-dimensional map when using the drive assist device for parallel parking of the vehicle by backward operation of the vehicle.
Fig. 14 is a view showing an example of an image displayed on the display according to a known drive assist device.
Fig. 15 is a view showing an example of the image displayed on the display according to the known drive assist device.
Fig. 16 is a view showing an environment of the operator's own vehicle when the image of Fig. 15 is displayed on the display according to the known drive assist device.

### DETAILED DESCRIPTION OF THE INVENTION

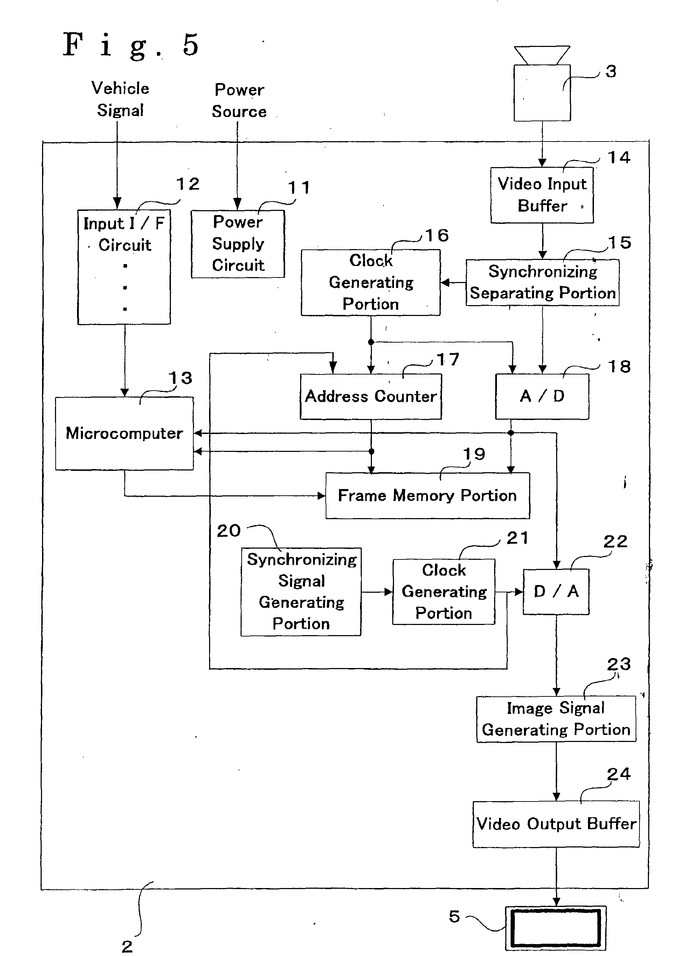

An embodiment of a drive assist device of the present invention will be explained referring to drawing figures as follows. As shown in Figs. 5-6, the drive assist device includes a microcomputer 2, a CCD camera 3, a steering angle sensor 4, a display 5, and a combination meter (not shown).

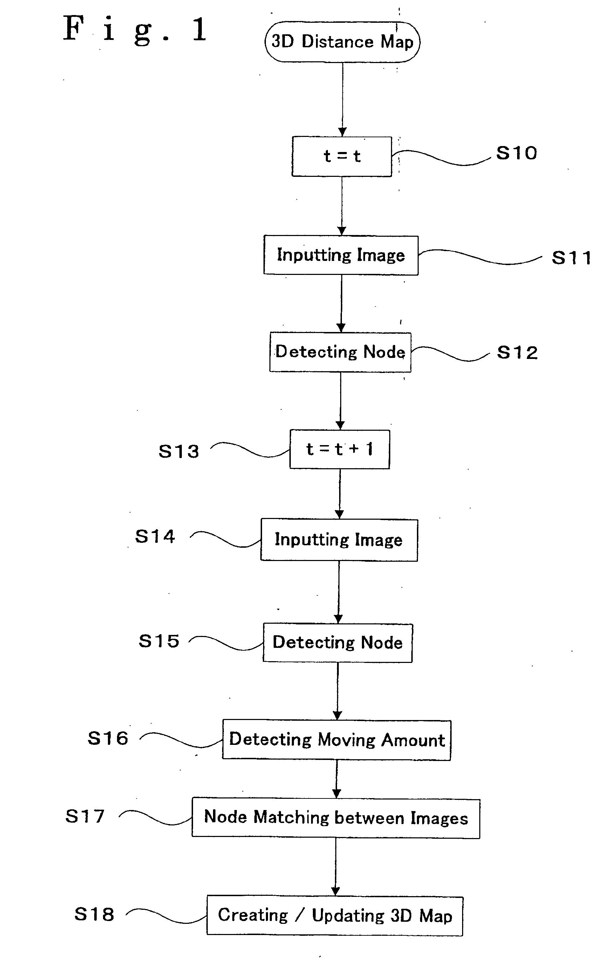

The microcomputer 2 performs ON-OFF switching of the CCD camera 3 and outputs an image signal from the CCD camera 3 to the display 5. Further, the microcomputer 2 serves as an estimated driving locus presuming means, a judging means, and a three-dimensional environment presuming means for carrying out transactions shown in flowcharts of Figs 1-3.

The CCD camera 3 serving as shooting means is equipped on a rear portion of the vehicle for outputting images shot with a wide-angle lens to the microcomputer 2 after converting the screen image to a picture signal. The images outputted to the microcomputer 2 are inverted for displaying on the display 5 so that the images are shown in the same manner when viewing the rear with a rearview mirror.

The steering angle sensor 4 serving as a moving amount detection means and equipped inside of the steering is provided for detecting the steering angle. The steering angle sensor 4. The detected steering angle is outputted to the microcomputer 2 as a steering angle signal. The combination meter serving as the moving amount detection means is provided for detecting the vehicle speed. The detected vehicle speed is outputted to the microcomputer 2 as a vehicle speed signal. Thus, the microcomputer 2 enables to calculate a moving amount of the operator's own vehicle.

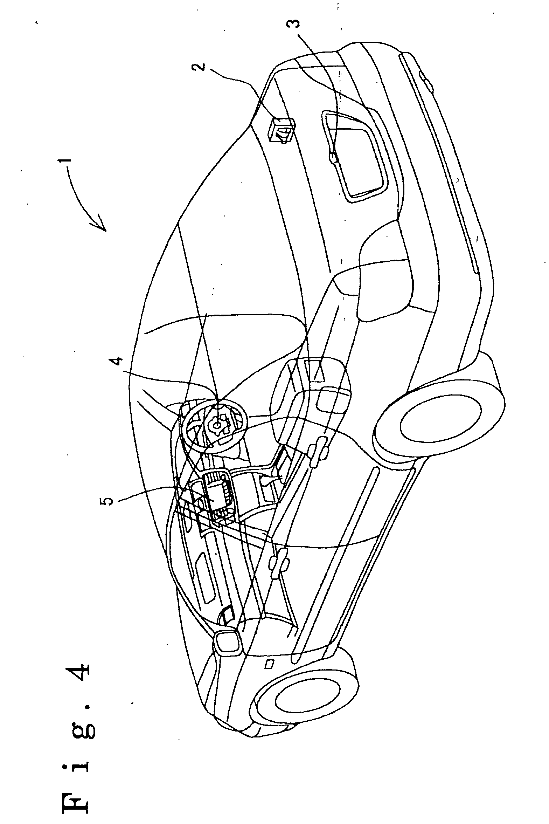

The display 5 serving as a display means displays images shot with the CCD camera 3 via the microcomputer 2. That is, as shown in Fig. 5, a luminance signal from the image signal of the CCD camera 3 is memorized in a frame memory portion 19 via a video input buffer 14, a synchronizing separating portion 15, an A/D conversion 18. On the other hand, the synchronizing signal is supplied to a clock generating portion 16 via the video buffer 14, and the synchronizing separating portion 15. In this case, a microcomputer (CPU) 13 reads in a vehicle signal from the steering sensor 4 (shown in Fig. 4) and the combination meter (not shown) via an input I/F circuit 12 and the only image shot by the CCD camera 3 every predetermined distance drive of the operator's own vehicle is memorized in the frame memory portion 19 based on the vehicle signal. The microcomputer 13 memorizes that vehicle signal.

The microcomputer 13 designates the address to the frame memory portion 19 based on a timing signal passing a synchronizing signal generating portion 20 and the clock generating portion 21 via the address counter 17. The microcomputer displays the luminance signal read from the frame memory portion 19 on the display 5 via a D/A converting portion 22, an image signal generating portion 23, and a video output buffer 24. The microcomputer 2 includes a power supply circuit 11 as shown in Fig. 5.

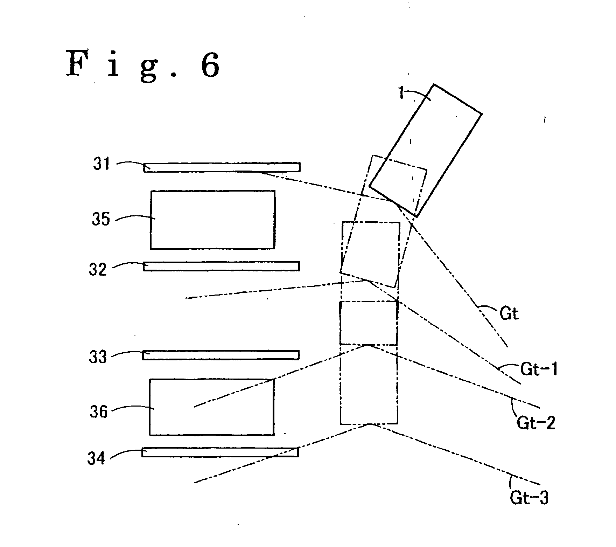

The operation of the drive assist device of the embodiment will be explained referring to flowcharts of Figs. 1-3. The case for performing the back up parking of the operator's own vehicle 1 into a space between a first parked vehicle 35 and a second parked vehicle 36 as shown in Fig. 6. With the drive assist device of the embodiment, the frame memory 9 memorizes images Gt-3, Gt-2, Gt-1 obtained by the CCD camera 3 every 20 centimeter drive of the operator's own vehicle after the vehicle speed of the operator's own vehicle 1 reaches less than 10 km/h. Meanwhile, when the vehicle speed of the operator's own vehicle 1 reaches 0 km/h, an image Gt obtained by the CCD camera 3 is memorized in the frame memory portion 19 and the further memorization of the image in the frame memory portion 19 is stopped (Fig. 5).

As shown in Fig. 1, in Step S10 and Step S11, the image Gt which is the last memorized image (i.e., the image obtained and memorized when the vehicle speed of the operator's own vehicle 1 reaches 0 km/h) out of the images Gt-3, Gt-2, Gt-1, Gt which are memorized in the frame memory portion 19 is read in to an image memory (not shown). In Step S12, characteristic point group called node is extracted from the image Gt. In practice, for example, numerous nodes are determined relative to the surface and boarder of the first and second parked vehicles 35, 36, and four white lines 31, 32, 33, 34 shown on the image Gt as shown in Fig. 6.

As shown in Fig. 1, in Step S13, S14, the image Gt-1 which is memorized second last (i.e., the image obtained and memorized immediately before the image Gt) out of the images Gt-3, Gt-2, Gt-1, Gt which are memorized in the frame memory portion 19 is read-in to an image memory (not shown). Then in Step S15, the characteristics point group called node is extracted from the image Gt-1.

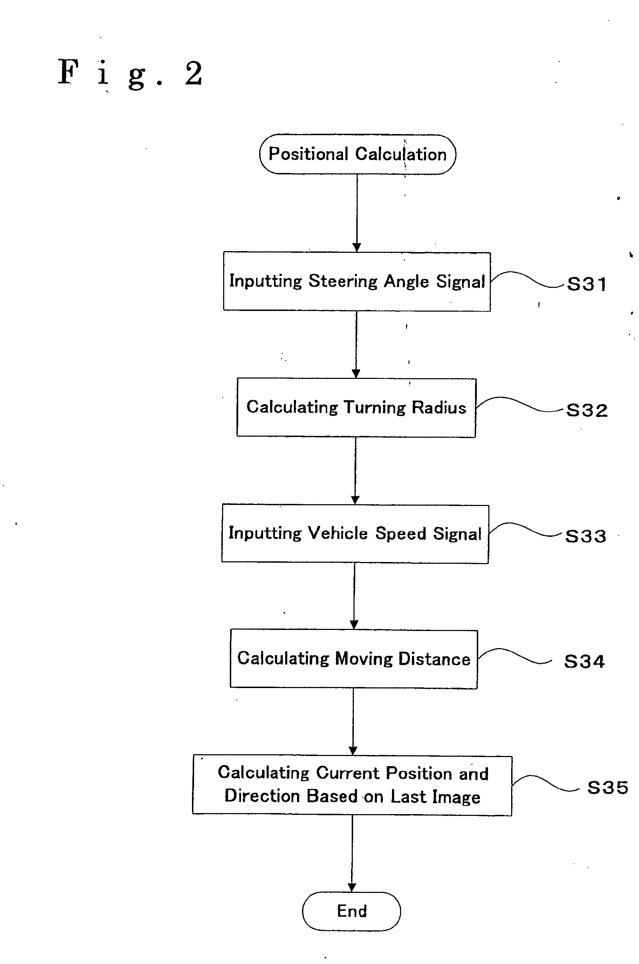

In Step S16, by calculating the moving amount (i.e., position and direction) of the operator's own vehicle 1 from the timing for obtaining and memorizing the image Gt-1 to the timing for obtaining and memorizing the image Gt, the geometrical positional relationship between the image Gt and the image Gt-1 can be comprehended. In practice, in Steps S31 and S32 of Fig. 2, the steering angel signals when obtaining and memorizing the image Gt -1 and obtaining and memorizing the image Gt are read-in and a turning radius of the operator's own vehicle 1 from the timing obtaining and memorizing the image Gt-1 to the timing obtaining and memorizing the image Gt is calculated. Then in Steps S33 and S34, the vehicle speeds when obtaining and memorizing the image Gt-1 and obtaining and memorizing the image Gt are read-in to calculate the moving distance of the operator's own vehicle 1 from the timing for obtaining and memorizing the image Gt-1 to the timing for obtaining and memorizing the image Gt. In Step S35, the moving amount (i.e., position and direction) of the operator's own vehicle 1 from the timing for obtaining and memorizing the image Gt-1 to the timing for obtaining and memorizing the image Gt-1 is calculated based on the turning radius and the moving distance of the operator's own vehicle 1, the geometrical positioning relationship between the image Gt and the image Gt-1 can be obtained. Then, the transaction is forwarded to Step S17 of Fig. 1.

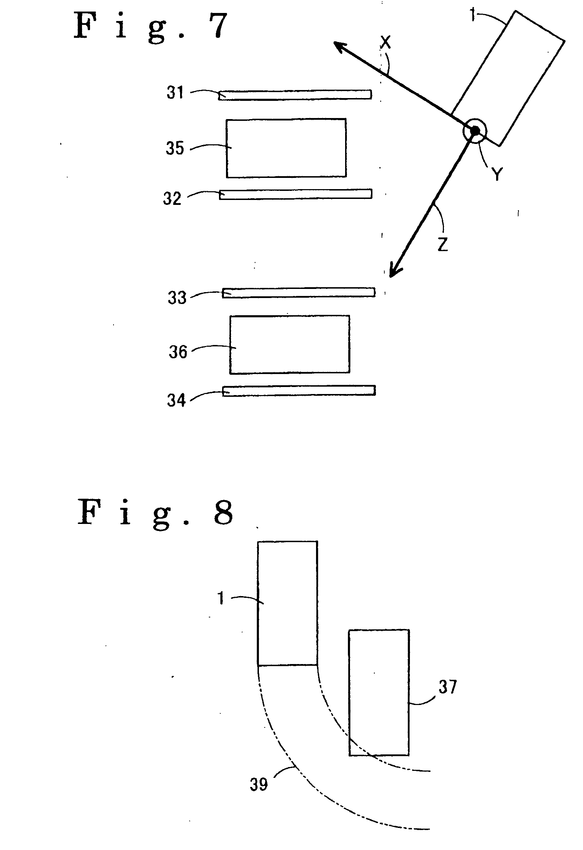

In Step S17, a matching of the nodes between the image Gt and the image Gt-1 is performed by evaluating the similarities of geometrical characteristics such as comer portions and end points based on the geometrical positional relationship between the image Gt and the image Gt-1. A calculation of the three-dimensional positional data of the matched nodes performed using a known trigonometric survey is memorized in a three-dimensional map in Step S18. The coordinate of the three-dimensional map is preset haying 0km/h of the vehicle speed of the operator's own vehicle 1 as reference as shown in Fig. 7.

The forgoing transactions are repeated after returning to Step S13. In practice, in Fig. 6, the matching of nodes between the image Gt-1 and the image Gt-2 and between the image Gt-2 and the image Gt-3 are performed and the three-dimensional positional data of the matched nodes are calculated to be projected and memorized on the three-dimensional map. Thus, the distance of the surface and the border of the first and the second parked vehicles 35, 36, and the four white lines 31, 32, 33, 34 shown on the images Gt-3, Gt-2, Gt-1, Gt are three-dimensionally comprehended via the three-dimensional positional data of the nodes.

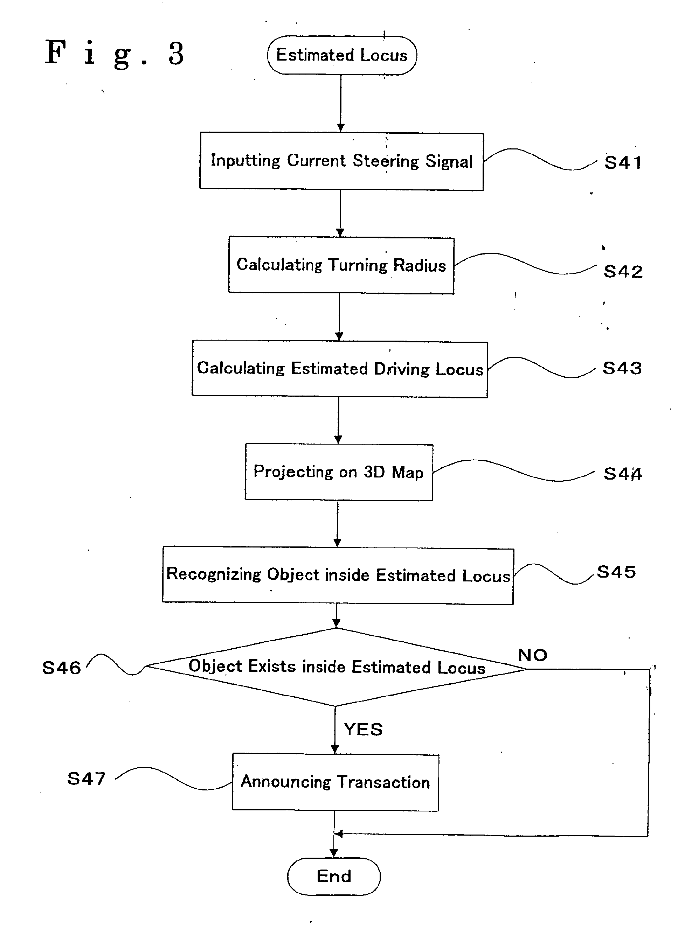

When the matching transaction of the nodes between the images Gt-3, Gt-2, Gt-1, Gt memorized in the frame memory portion 19 is completed, the transaction is forwarded to the transaction shown in the flowchart of Fig 3. That is, in Steps S41 and S42 of Fig. 3, the current steering angle signal is read-in via the steering angle sensor 4 to calculate the current turning radius of the operator's own vehicle 1. In Step S43, an estimated driving locus (i.e., the positional data of an estimated driving locus) of the operator's own vehicle 1 is calculated based on the current turning radius of the operator's own vehicle 1. In Step S44, the estimated driving locus (the positional data of an estimated driving locus) of the operator's own vehicle 1 is three-dimensionally projected on the three- dimensional map.

In Step S45, objects existing inside of the estimated driving locus of the operator's own vehicle 1 is comprehended using the three-dimensional map. Then in Step S46, it is judged whether the object is existing inside of the estimated driving locus of the operator's own vehicle 1. In practice, for example, the existence of the object inside of the estimated driving locus is judged by whether the three-dimensional positional data of the nodes exists in the region surrounded with the estimated driving locus (i.e., the positional data of the estimated driving locus) of the operator's own vehicle 1 in the three-dimensional map.

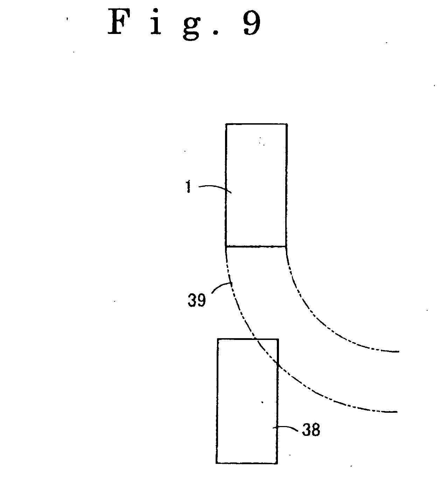

When it id judged that the objects exists inside of the estimated driving locus of the operator's own vehicle 1 (i.e., S46:YES), the transaction is forwarded to Step S47 to perform the announcing transaction to end the transaction. For example, in case the operator's own vehicle 1 contacts a part of an objective vehicle 37 at the internal side of the estimated driving locus 39 of the operator's own vehicle 1 as shown in Fig. 8, and in case the operator's own vehicle 1 contacts a part of an objective vehicle 38 at the external side of the operator's own vehicle as shown in Fig. 9, the announcing transaction is performed. On the other hand, when it is judged that the object does not exist in the estimated driving locus of the operator's own vehicle 1 (i.e., S46:NO), the transaction is ended without performing the announcing transaction of Step S47.

The region corresponding to the road surface is not included in the region surrounded with the estimated driving locus (i.e., the positional data of the estimated driving locus) of the operator's own vehicle 1. Thus, for example, in Figs. 6-7, the three-dimensional positional data of nodes corresponding to the surface and border of the four white lines 31, 32, 33, 34 is not judged being existing in the region surrounded with the estimated driving locus (the positional data of the estimated driving locus) of the operator's own vehicle 1.

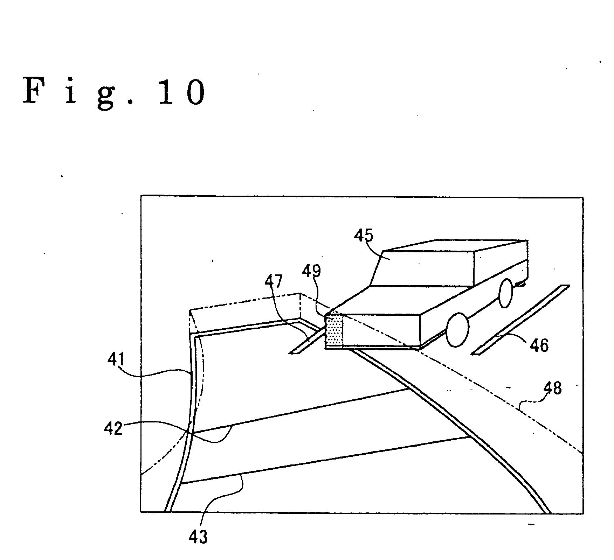

According to the drive assist device of this embodiment, the estimated driving locus of the operator's own vehicle 1 is displayed overlapping the display of the last mentioned image Gt (i.e., obtained and memorized when the vehicle speed of the operator's own vehicle 1 reaches 0 km/h) on the display 5 of the operator's own vehicle 1. In this case, for example, as shown in Fig. 10, an estimated driving locus 41 and two distance indicator lines 42, 43 are displayed overlapping the rear view image of an objective vehicle 45 and two white lines 46, 47. Meanwhile, the estimated driving locus 41 is three-dimensionally displayed with a line 48 based on the three-dimensional map and a portion 49 of the objective vehicle 45 existing inside of the estimated driving loci 41, 48 is performed with image processing to be distinguishably displayed.

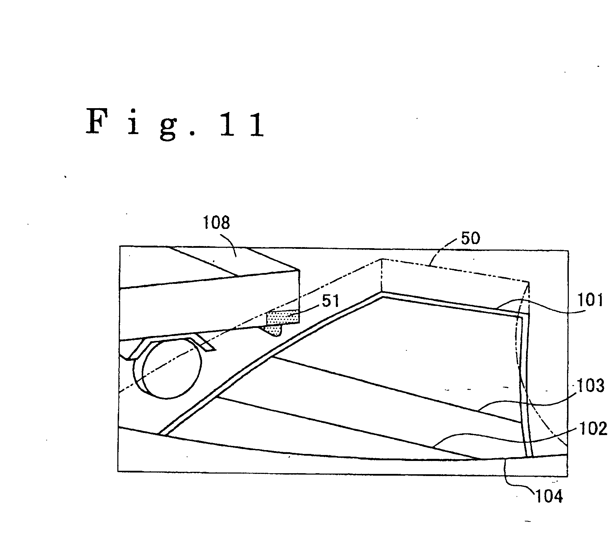

Applying the foregoing operation of the drive assist device according to the embodiment of the present invention to Fig. 15, the estimated driving locus 101 and two distance indicator lines 102, 103 are displayed overlapping the rear view image of the bumper rear end 104 of the operator's own vehicle 100 and the objective vehicle 108 as shown in Fig. 11. Further, the estimated driving locus 101 is three-dimensionally displayed with a line 50 based on the three-dimensional map for performing with the image processing a portion 51of the objective vehicle 108 existing inside of the estimated driving loci 101, 50 to be distinguishably displayed.

As explained above, with the drive assist device of the embodiment, the matching of the nodes between the image Gt and the image Gt-1, between the image Gt-1 and the image Gt-2, between the image Gt-2 and the image Gt-3 is performed (i.e., S17 of Fig. 1) referring to the moving amount of the operator's own vehicle 1 calculated based on the plural images Gt-3, Gt-2, Gt1, Gt obtained using the CCD camera 3 during the driving of the operator's own vehicle 1, the steering angle signal detected by the steering angle sensor 4, and the vehicle speed signal detected by the combination meter (i.e., S16 of Fig. 1). In addition, with the drive assist device of the embodiment, the three-dimensional positional data of the matched nodes is calculated to project on the three-dimensional map to be memorized (i.e., S18 of Fig. 1). Thus, the distance of the surface and the border of the first parked vehicle 35, the second parked vehicle 36, and four white lines 31, 32, 33, 34 is three-directionally comprehended via the three-dimensional positional data of the nodes.

Because the existence of the object inside of the estimated driving locus of the operator's own vehicle 1 is judged in Step S46 of Fig. 3, for example, even when the estimated driving locus 101 is displayed crawling under the objective vehicle 108 with the overhang as shown in Fig. 15, the judgment whether the operator's own vehicle 100 contacts the objective vehicle 108 with the overhang can be judged.

With the drive assist device of the embodiment, as shown in Fig. 10, the estimated driving locus 41 is three-dimensionally displayed with the line 48 and the portion 49 of the objective vehicle 45 existing inside of the estimated driving loci 41, 48 distinguishably from the estimated driving loci 41, 48 on the display 5. And as shown in Fig. 11, the estimated driving locus 101 is three-dimensionally displayed with the line 50 and the portion 51 of the objective vehicle 108 existing inside of the estimated driving loci 101, 50 is displayed distinguished from the estimated driving loci 101, 50. Thus, because the judgment of Step S46 of Fig. 1 can be confirmed with the image on the display 5, an excellent assisting performance of the driving operation is achieved.

The present invention is not limited to the foregoing embodiment and can be varied within the range not deviating from its scope.

For example, although the portion 49 of the objective vehicle 45 existing inside of the estimated driving loci 41, 48 is displayed distinguished from the estimated driving loci 41, 48 while three-dimensionally displaying the estimated driving locus 41 with the line 48 on the display 5 as shown in Fig. 10 according to the foregoing embodiment, the portion 49 of the objective vehicle 45 existing inside of the estimated driving loci 41, 48 may be displayed distinguishing from other portions of the objective vehicle without displaying the estimated driving loci 41, 48.

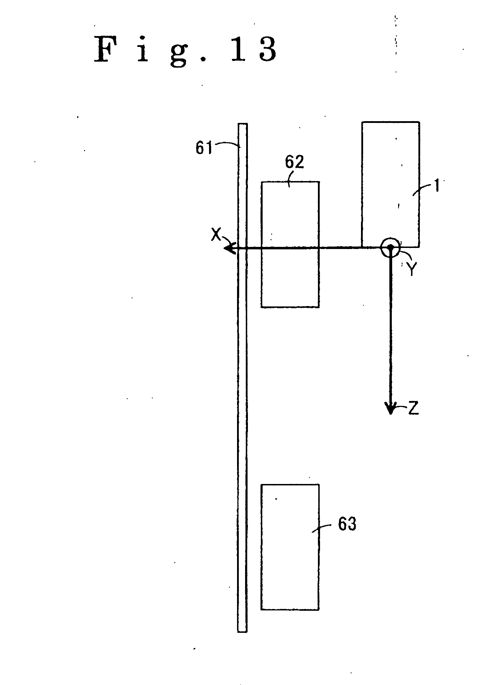

Although the foregoing embodiment explains about the case of performing back up parking for parking the operator's own Vehicle 1 in the space between the first parked vehicle 35 and the second parked vehicle 36 as shown in Fig. 6, the drive assist device may be applied to the parallel parking for parking the operator's own vehicle 1 in a space between a front parked vehicle 62 and a rear parked vehicle 63 with backward operation. In this case, the front parked vehicle 62, the rear parked vehicle 63, and a shoulder 61 of the road are shown in the image Gt displayed on the display 5. The coordinate of the three-dimensional map is determined having the timing that the vehicle speed of the operator's own vehicle 1 reaches 0 km/h as a reference as shown in Fig. 13.

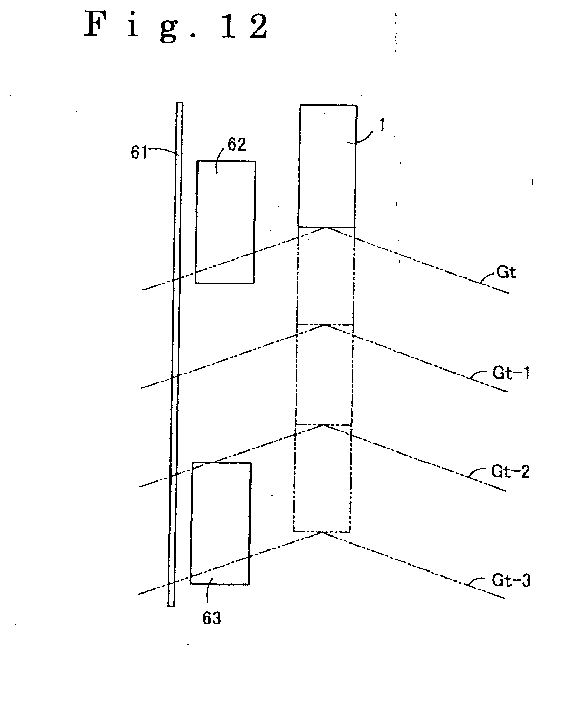

The drive assist device of the embodiment is not limited to the back up parking of Fig. 6 and the parallel parking of Fig. 12 and may be applied to the forward operation of the vehicle.

Although the drive assist device of the embodiment is constructed to memorize the image Gt obtained with the CCD camera 3 in the frame memory portion 19 when the vehicle speed of the operator's own vehicle 1 reaches 0 km/h, the drive assist device may be constructed to memorize the image Gt obtained with the CCD camera 3 in the frame memory portion 19 when a shift lever is changed to a reverse mode by providing a shift position sensor.

According to the drive assist device of the present invention, the three-dimensional environment presuming means recognizes the surrounding environment of the operator's own vehicle based on the plural images obtained with the shooting means during operating the operator's own vehicle and based on the moving amount of the operator's own vehicle detected with the moving amount detecting means. Further, the judging means judges the existence of the contacting object relative to the operator's own vehicle whose is estimated to move along the estimated driving locus based on the surrounding environment of the operator's own vehicle comprehended with the three-dimensional environment presuming means. Thus, even when the estimated driving locus crawls under the object with the overhang is displayed with the display means, the judgment whether the operator's own vehicle contacts the object with the overhang can be achieved with the judging means.

According to the drive assist device of the present invention, when the display means displays the portion of the object contacting the estimated driving locus and the object distinguishing from the portion of the object not contacting the estimated driving locus and the object, or when the display means displays the portion of the object existing inside of the estimated driving locus distinguishing from the estimates driving locus, or when the display means display the estimated driving locus three-dimensionally, the judgment by the judging means can be confirmed with the image, the further better performance of the assisting of the driving operation can be achieved.

The principles, preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims be embraced thereby.

A drive assist device which enables to judge whether an operator's own vehicle contacts an object with an overhang even when an estimated driving locus is displayed crawling under the object with the overhang. With the drive assist device, matching of nodes between plural images is performed based on a moving amount of the operator's own vehicle calculated based on the plural images obtained with a CCD camera during vehicle driving and a vehicle signal calculated based on a vehicle speed signal detected with a combination meter and a steering angle signal detected with a steering angle sensor. A three-dimensional positional data of the matched modes is calculated to be projected on and memorized in a three-dimensional map. The existence of the object inside of the estimated driving locus of the operator's own vehicle using the three-dimensional map.

## Claims

1. A drive assist device comprising:
a shooting means for obtaining an image showing a surrounding environment of an operator's own vehicle;
an estimated driving locus presuming means for calculating an estimated driving locus of the operator's own vehicle from a steering angle of the operator's own vehicle;
a display means for displaying the estimated driving locus overlapping the image;
a judging means for judging an existence of an object contacting the operator's own vehicle whose is estimated to move along the estimated driving locus;
a moving amount detection means for detecting a moving amount of the operator's own vehicle; and
a three-dimensional environment presuming means for recognizing the surrounding environment of the operator's own vehicle from the plural images obtained during operating the operator's own vehicle and from the moving amount of the operator's own vehicle; wherein
the judging means judges the existence of the object contacting the operator's own vehicle based on the surrounding environment of the operator's own vehicle which is three-dimensionally recognized with the three-dimensional environment presuming means.

2. A drive assist device according to Claim 1, wherein the display means displays a portion of the object contacting the estimated driving locus distinguishing from a portion of the object not contacting the estimated driving locus.

3. A drive assist device according to Claim 1, wherein the display means displays a portion of the object within the estimated driving locus distinguishing from the estimated driving locus.

4. A drive assist device according to Claim 1, wherein the display means three-dimensionally displays the estimated driving locus.

5. A drive assist device according to Claim 2, wherein the display means three-dimensionally displays the estimated driving locus.

6. A drive assist device according to Claim 3, wherein the display means three-dimensionally displays the estimated driving locus.

7. A drive assist device according to Claim 1, wherein the moving amount is calculated based on a steering angle and a vehicle speed.

8. A drive assist device according to Claim 1, wherein the surrounding environment of the operator's own vehicle is recognized by detecting nodes of the plural images.

9. A drive assist device programmed to:
shoot an image of a surrounding environment of an operator's own vehicle;
calculate an estimated driving locus of the operator's own vehicle from a steering angle of the operator's own vehicle;
display an estimated driving locus overlapping the image;
judge an existence of an object contacting the operator's own vehicle within the estimated driving locus;
detect a moving amount of the operator's own vehicle;
recognize the surrounding environment of the operator's own vehicle based on the plural images obtained during operation of the operator's own vehicle and
from the moving amount of the operator's own vehicle; and
judge the existence of the existence of the object contacting the operator's own vehicle based on the surrounding environment of the operator's own vehicle which is three-dimensionally recognized.

10. A drive assist device according to Claim 9, further programmed to:
display a portion of the object contacting the estimated driving locus distinguishing from a portion of the object not contacting the estimated driving locus.

11. A drive assist device according to Claim 9, further programmed to:
display a portion of the object within the estimated driving locus distinguishing from the estimated driving locus.

12. A drive assist device according to Claim 9, further programmed to:
display the estimated driving locus three-dimensionally.

13. A drive assist device according to Claim 10, further programmed to:
display the estimated driving locus three-dimensionally.

14. A drive assist device according to Claim 11, further programmed to:
display the estimated driving locus three-dimensionally.

15. A drive assist device according to Claim 9, wherein the moving amount is calculated based on a steering angle and a vehicle speed.

16. A drive assist device according to Claim 9, wherein the surrounding environment of the operator's own vehicle is recognized by detecting nodes of the plural images.
